# EUROPÄISCHE PATENTSCHRIFT

(11) **EP 0 798 175 B1**
(45) Veröffentlichungstag und Bekanntmachung des Hinweises auf die Patenterteilung: **30.05.2001**
(21) Anmeldenummer: 97104570.3
(22) Anmeldetag: 18.03.1997
(51) Int. Cl.: B60R 21/32, B60R 22/46

(54) **Verfahren zur Steuerung der Aktivierung eines Fahrzeuginsassen-Rückhaltesystems**
Method for controlling the activation of a vehicle occupant restraint system
Procédé de contrôle de l'activation d'un système de retenue d'un occupant de véhicule

(30) Priorität: 25.03.1996 DE 19611718
(43) Veröffentlichungstag der Anmeldung: 01.10.1997
(73) Patentinhaber: TRW Occupant Restraint Systems GmbH & Co. KG, 73551 Alfdorf (DE)
(72) Erfinder: Bigi, Dante, Dr., 73557 Mutlangen (DE); Bosio, Allen Charles, 73575 Leinzell (DE)
(74) Vertreter: Degwert, Hartmut, Dipl.-Phys.

(56) Entgegenhaltungen:
- EP-A- 0 382 552
- WO-A-95/11819
- DE-C- 3 413 768
- US-A- 3 713 667
- US-A- 5 209 510
- US-A- 5 338 063
- US-A- 5 497 327

## Beschreibung

Die Erfindung betrifft ein Verfahren zur Steuerung der mehrstufigen Aktivierung eines Fahrzeuginsassen-Rückhaltesystems mit einem Gassack, wobei bei dem Verfahren eine fahrzeugsensitive Messung der beim Fahrzeugaufprall auftretenden Geschwindigkeitsdifferenzwerte erfolgt. Darüber hinaus betrifft die Erfindung ein Steuersystem zur Durchführung des Verfahrens mit einem Meßsensor zur Ermittlung der Unfallschwere.

Bislang übliche Verfahren zur Steuerung der Aktivierung eines Fahrzeuginsassen-Rückhaltesystems arbeiten folgendermaßen: die Stärke der Verzögerung eines Fahrzeugs wird stetig ermittelt, so daß sich eine Funktion der Beschleunigung über die Zeit ergibt. Diese Funktion wird stetig, parallel zur Messung der Verzögerung abgeleitet, so daß, anhand eines Kurvenverlaufs der Beschleunigung über der Zeit ausgedrückt, die Steigung der Beschleunigungskurve ermittelt wird. Diese Steigung wird mit einem vorbestimmten Steigungsschwellenwert verglichen. Ab Erreichen dieses Steigungsschwellenwertes wird das Fahrzeuginsassen-Rückhaltesystem aktiviert.

Das bislang verwendete, oben beschriebene Verfahren zur Steuerung der Aktivierung eines Fahrzeuginsassen-Rückhaltesystems hat den Nachteil, daß es unter Umständen zu lange dauern kann, bis eine zweite Stufe eines mehrstufigen Gasgenerators aktiviert wird, da die Auslösung erst bei Erreichen eines Steigungsschwellenwerts erfolgt. Da unterschiedliche Fahrzeugteile, die nacheinander deformiert werden, auch unterschiedliche Deformationsarbeit aufnehmen können, können die Beschleunigungswerte sehr stark schwanken. Deshalb wird üblicherweise die Steigung der Beschleunigung gemittelt. Da die zuvor beschriebene gemittelte Steigung nur relativ langsam zunimmt, wird der Steigungsschwellenwert unter Umständen relativ spät erreicht, so daß es zu Verzögerungen bei der Aktivierung des Rückhaltesystems kommen kann.

Aus der nächstkommenden WO-A-95/11819 ist ein Verfahren zur Steuerung der mehrstufigen Aktivierung eines Fahrzeuginsassen-Rückhaltesystems bzw. ein entsprechendes Steuersystem und auch das Rückhaltesystem selbst bekannt, bei dem unterschiedliche Ausgangssignale zur Einleitung unterschiedlicher Aktivierungsstufen des Rückhaltesystems in Abhängigkeit von der Intensität des Fahrzeugaufpralls geliefert werden.

Aufgabe der Erfindung ist es, ein Verfahren zu schaffen, welches eine verzögerte Aktivierung eines Fahrzeuginsassen-Rückhaltesystems vermeidet. Weiter soll ein Steuersystem zur Durchführung des Verfahrens angegeben werden, das einen Meßsensor zur Ermittlung der Unfallschwere aufweist.

Diese Aufgabe wird durch ein Verfahren mit den Merkmalen des Anspruchs 1 gelöst.

Das erfindungsgemäße Verfahren bestimmt die Unfallschwere nicht aufgrund der Steigung der Beschleunigungskurve, sondern aufgrund einer Zeitdifferenz zwischen dem Beginn des Auftretens von Geschwindigkeitsdifferenzwerten und dem Erreichen eines vorbestimmten Geschwindigkeitsdifferenzschwellenwerts. Abhängig davon werden unterschiedliche Ausgangssignale geliefert, die unterschiedliche Aktivierungsstufen des Rückhaltesystems einleiten. Wird beispielsweise ein Geschwindigkeitsdifferenzschwellenwert sehr früh erreicht, wird eine oder es werden gemäß einer vorteilhaften Ausgestaltung sämtliche Aktivierungsstufen gleichzeitig eingeleitet. Es wird also unter Umständen nach Erreichen eines ersten Schwellenwertes nicht mehr abgewartet, bis ein zweiter Schwellenwert erreicht wird, sondern aufgrund einer anfänglichen Messung wird sozusagen die maximale Geschwindigkeitsdifferenz und damit die Unfallschwere prognostiziert. Wird hingegen eine vorgegebene Geschwindigkeitsdifferenz, die einem Fahrzeugaufprall niedrigerer Intensität zugeordnet ist, relativ spät erreicht, so ist dies ein Indiz für einen weniger schweren Unfall, so daß nur eine Aktivierungsstufe eingeleitet wird.

Gemäß einer bevorzugten Ausführungsform ist zusätzlich noch eine Abtastung des Gurtsystems vorgesehen, zur Ermittlung, ob ein Fahrzeuginsasse angegurtet ist oder nicht. Das entsprechende Signal wird zusätzlich in die Bestimmung der Ausgangssignale mit einbezogen. Ist beispielsweise ein Fahrzeuginasse nicht angeschnallt, so muß, obwohl es sich möglicherweise nur um einen Fahrzeugaufprall mit geringerer Intensität handelt, ein entsprechendes Ausgangssignal geliefert werden, welches eine Aktivierungsstufe einleitet, die einem Fahrzeugaufprall mit hoher Intensität entspricht, so daß z.B. bei Verwendung eines Mehrkammergassacks sämtliche Kammern gefüllt werden.

Zudem kann auch noch eine Ermittlung erfolgen, ob ein Kindersitz vorhanden ist oder nicht, wobei das entsprechende Signal in die Bestimmung der Ausgangssignale mit einbezogen wird. Entsprechend wird eine Aktivierungsstufe eingeleitet, die auf das Vorhandensein eines Kindersitzes abgestimmt ist, so daß ein entsprechend ausgebildeter Gassack unter Umständen nur teilweise oder überhaupt nicht entfaltet wird.

Vorzugsweise werden ab Erreichen eines vorbestimmten Zeitdifferenzschwellenwertes durch die Zeitdifferenz aus Schritt d) mehrere Aktivierungsstufen zumindest annähernd gleichzeitig eingeleitet, so daß nicht mehr abgewartet werden muß, bis ein zweiter Geschwindigkeitsdifferenzschwellenwert erreicht wird, der größer als der erste ist. Wird ein Geschwindigkeitsdifferenzschwellenwert deshalb sehr rasch erreicht, ist dies ein eindeutiger Hinweis auf einen Fahrzeugaufprall mit hoher Intensität, so daß gleichzeitig sämtliche Aktivierungsstufen eingeleitet werden können, um keine Zeit zum Entfalten eines Gassacks zu verlieren.

Weiter kann innerhalb einer vorgegebenen kurzen Zeitspanne ab Einleitung der ersten Aktivierungsstufe ermittelt werden, ob sich inzwischen die Geschwindigkeitsdifferenz verändert hat. Falls diese angewachsen ist, wird anschließend eine zweite Aktivierungsstufe eingeleitet, wobei die zweite Aktivierungsstufe bei Erreichen eines vorbestimmten zweiten Geschwindigkeitsdifferenzschwellenwertes, der größer als der erste ist, bereits vor Ablauf der vorgegebenen Zeitspanne eingeleitet werden kann. Darüber hinaus ist es auch möglich, unabhängig von der Geschwindigkeitsdifferenzänderung stets nach Ablauf der vorgegebenen kurzen Zeitspanne ab Einleitung der ersten Aktivierungsstufe eine oder mehrere weitere Aktivierungsstufen einzuleiten, wenn die Geschwindigkeit nicht merklich absinkt. Natürlich kann auch für diesen Fall vorgesehen sein, daß bei Anwesenheit eines Kindersitzes die weiteren Aktivierungsstufen nicht eingeleitet werden.

Die Aufgabe zur Schaffung eines Steuersystems mit einem Meßsensor zur Ermittlung der Intensität des Fahrzeugaufpralls zur Durchführung des Verfahrens wird dadurch gelöst, daß der Meßsensor als stetig die Geschwindigkeitsänderung erfassender Sensor ausgebildet ist und daß eine Steuereinheit zum Vergleich der Geschwindigkeitsänderung mit vorgegebenen Geschwindigkeitsdifferenzschwellenwerten, zum Bestimmen der Zeitdifferenz, zum Vergleich der Zeitdifferenz mit vorbestimmten Zeitdifferenzschwellenwerten und zum Liefern der unterschiedlichen Ausgangssignale vorgesehen ist. Dabei kann der Sensor entweder in den festgelegten Zeitabständen selbst die Geschwindigkeitsdifferenzwerte abgeben oder es kann die Steuereinheit z.B. in festgelegten Zeitabständen die aktuellen Geschwindigkeitswerte über den Sensor abfragen.

Gegebenenfalls ist auch ein Gurtsensor, vorzugsweise ein Gurtschloßsensor vorgesehen, der bestimmt, ob ein Fahrzeuginsasse angegurtet ist oder nicht. Ebenso kann ein Kindersitzdetektor vorgesehen sein.

Ein Fahrzeuginsassen-Rückhaltesystem mit einem zuvor beschriebenen Steuersystem umfaßt einen Gasgenerator, der so ausgebildet ist, daß er abhängig von den Ausgangssignalen der Steuereinheit unterschiedliche Gassackinnendrücke erzeugen kann. Damit wird der Gassack mehr oder weniger stark aufgeblasen.

Vorzugsweise ist der Gasgenerator dabei als Mehrstufengasgenerator ausgebildet, der auch eine durch die Steuereinheit steuerbare Ausströmöffnung umfaßt.

Der Mehrkammergassack weist vorteilhafterweise Wandungsteile aus einem Gewebe auf, das bei zunehmendem Gassackinnendruck eine geringere Gasdurchlässigkeit besitzt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 einen schematischen Aufbau des erfindungsgemäßen Steuersystems zur Durchführung des erfindungsgemäßen Verfahrens,
Figur 2 ein Gassack-Rückhaltesystem mit einem Mehrkammer-Gassack in vollständig entfaltetem Zustand,
Figur 3 ein ΔV-T-Diagramm mit sechs Kurven, die die Abläufe bei Fahrzeugaufprallen mit unterschiedlicher Intensität darstellen, und
Figur 4 ein Kammerinnendruck-Zeit-Diagramm, welches die Auswirkungen von unterschiedlichen Aktivierungsstufen auf den Kammerinnendruck eines Mehrkammer-Gassacks zeigt.

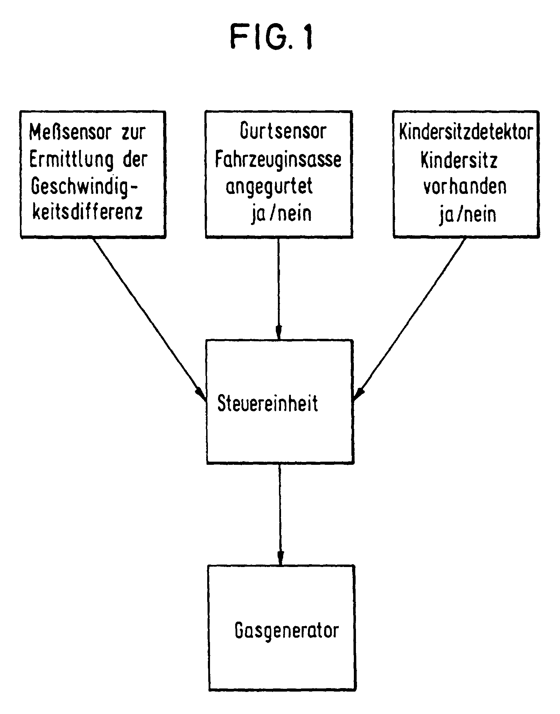

In Fig. 1 ist ein System zur Steuerung der mehrstufigen Aktivierung eines Fahrzeuginsassen-Rückhaltesystems mit einem Mehrkammer-Gassack schematisch gezeigt. Das Steuersystem umfaßt einen Meßsensor zur Ermittlung der Geschwindigkeitsdifferenz, der die Geschwindigkeitsänderung eines Fahrzeugs während eines Aufpralls stetig erfaßt. Das Steuersystem beinhaltet weiter einen Gurtsensor, der ermittelt, ob ein Fahrzeuginsasse angegurtet ist oder nicht, sowie einen Kindersitzdetektor, der ermittelt, ob ein Kindersitz vorhanden ist oder nicht. Der Meßsensor, der Gurtsensor und der Kindersitzdetektor liefern entsprechende Daten zu einer Steuereinheit, welche diese Daten auswertet und, abhängig hiervon, unterschiedliche Aktivierungsstufen eines mehrstufigen Gasgenerators einleitet.

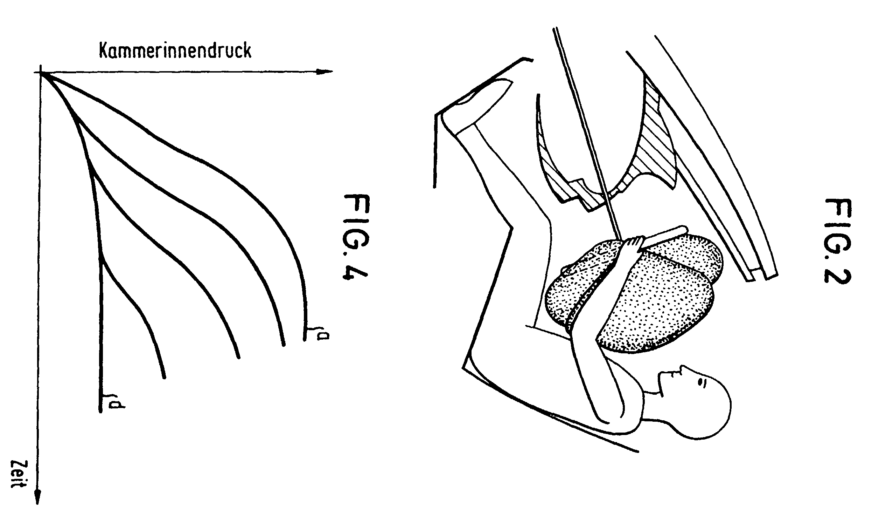

In Fig. 2 ist ein Mehrkammer-Gassack dargestellt, mit dem das Steuersystem nach Fig. 1 zusammenwirkt. Wie im folgenden noch näher erläutert wird, können eine oder mehrere Aktivierungsstufen für einen mehrstufigen Gasgenerator, der dem Mehrkammer-Gassack zugeordnet ist, eingeleitet werden. Dadurch wird gesteuert, ob eine oder mehrere Kammern aufgeblasen werden und welche Kammerinnendrücke in den Kammern herrschen sollen.

Das in Fig. 1 gezeigte Steuersystem arbeitet dabei folgendermaßen. Der Meßsensor ermittelt vorzugsweise stetig während eines Unfalls die auftretenden Geschwindigkeitsdifferenzen und gibt diese zur Steuereinheit weiter. Die Steuereinheit bestimmt einerseits den Beginn des Zeitpunkts, ab dem Geschwindigkeitsdifferenzwerte gemessen werden und zusätzlich den Zeitpunkt, ab dem ein vorbestimmter Geschwindigkeitsdifferenzschwellenwert erreicht wird. Hierzu werden stetig die gelieferten Geschwindigkeitsdifferenzen mit dem Differenzschwellenwert verglichen. Die Steuereinheit bestimmt die Zeitdifferenz aus den beiden Zeitpunkten und vergleicht diese mit vorgegebenen Zeitdifferenzschwellenwerten. Abhängig davon, welche Zeitdifferenzschwellenwerte erreicht werden, liefert die Steuereinheit unterschiedliche Ausgangssignale zur Einleitung von unterschiedlichen Aktivierungsstufen eines Rückhaltesystems, vorliegend des Mehrkammer-Gassacks.

Das vom Gurtsensor der Steuereinheit übermittelte Signal wird in die Ausgangssignale mit einbezogen. Ist beispielsweise die Aufprallintensität nicht sonderlich hoch, so daß nur eine Aktivierungsstufe eingeleitet werden müßte, so setzt dies einen angegurteten Fahrzeuginsassen voraus. Ist dieser nicht angegurtet, so werden sämtliche Aktivierungsstufen, unabhängig von der Intensität, ausgelöst.

Ist ein Kindersitz vorhanden, so kann beispielsweise nur eine Aktivierungsstufe oder überhaupt keine Aktivierungsstufe eingeleitet werden um zu verhindern, daß Verletzungen aufgrund des sich entfaltenden Gassacks auftreten.

Innerhalb einer vorgegebenen kurzen Zeitspanne ab Einleitung der ersten Aktivierungsstufe wird ermittelt, ob sich inzwischen die Geschwindigkeitsdifferenz verändert hat, und, falls dies der Fall ist, wird anschließend die zweite Aktivierungsstufe eingeleitet, wobei die zweite Aktivierungsstufe bei Erreichen des vorbestimmten zweiten Geschwindigkeitsdifferenzschwellenwertes auch bereits vor Ablauf dieser vorgegebenen Zeitspanne eingeleitet werden kann. Alternativ ist es auch möglich, unabhängig von der Geschwindigkeitsänderung stets nach Ablauf der vorgegebenen kurzen Zeitspanne ab Einleitung der ersten Aktivierungsstufe auch die weitere Aktivierungsstufe einzuleiten, wenn die Geschwindigkeit inzwischen nicht merklich abgesunken ist.

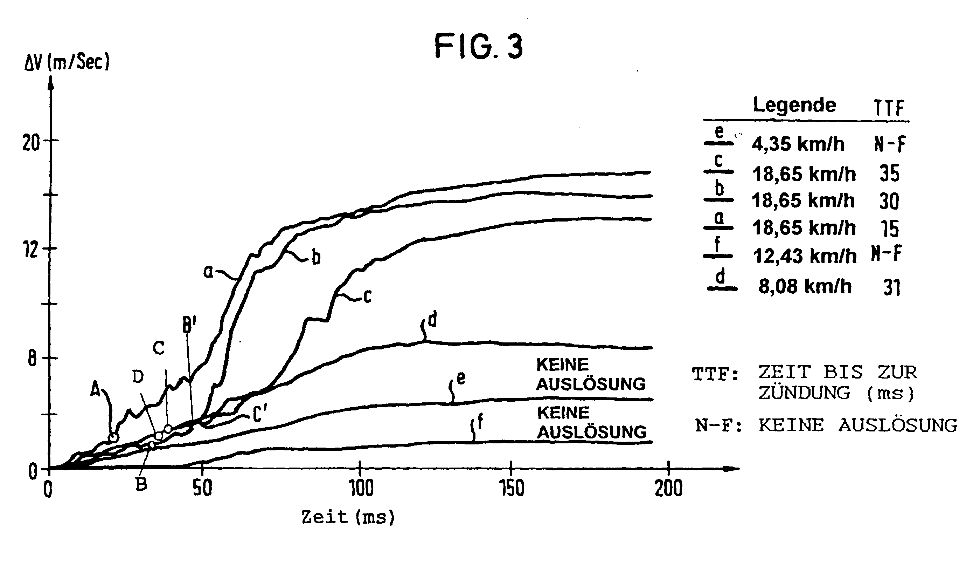

Anhand von Fig. 3 wird das Verfahren mit seinen verschiedenen möglichen Abläufen näher erläutert. Mit e ist der Verlauf eines Fahrzeugaufpralls (Frontalaufprall auf eine Mauer) sehr geringer Intensität dargestellt, bei dem ein vorbestimmter erster Geschwindigkeitsdifferenzschwellenwert nicht erreicht wird. Somit wird der Gassack nicht entfaltet. Die Kurve f zeigt die Geschwindigkeitsänderung beim Überfahren eines Randsteines, genauer gesagt beim Herabfahren von einem Randstein. Dabei darf der Gassack nicht entfaltet werden. Die Verläufe der Kurven a bis d kennzeichnen Unfälle mit höherer Intensität. Die Kurve a zeigt dabei den Verlauf der Geschwindigkeitsänderung bei einem Aufprall eines mit 18,65 km/h fahrenden Fahrzeugs auf eine Mauer. Die Kurve b zeigt den Verlauf der Geschwindigkeitsänderung eines mit 18,65 km/h gegen einen Pfosten prallenden Fahrzeugs. Die Kurve c zeigt den Verlauf der Geschwindigkeitsänderung bei einem Schrägaufprall eines mit 18,65 km/h fahrendes Fahrzeugs, wobei der Aufprallwinkel 30° beträgt. Die Kurve d zeigt schließlich den Verlauf der Geschwindigkeitsänderung eines mit 8,08 km/h auf eine Mauer auftreffenden Fahrzeugs.

Bei dem Fahrzeugaufprall gemäß der Kurve a ist die Intensität so hoch, daß ein vorbestimmter erster Geschwindigkeitsdifferenzschwellenwert extrem früh erreicht wird (Zeitpunkt A). Die Zeitdifferenz vom Beginn der Messung von Geschwindigkeitsdifferenzen bis zu dem Erreichen des Schwellenwerts ist deshalb sehr kurz, so daß ein vorbestimmter Zeitdifferenzschwellenwert erreicht wird, der einem Fahrzeugaufprall mit hoher Intensität entspricht. Dementsprechend wird in Punkt A nicht nur die erste Kammer des Gassacks, sondern gleichzeitig auch die zweite Kammer entfaltet.

Mit zunehmender Zeit wird auch der erste Geschwindigkeitsdifferenzschwellenwert angehoben, wie anhand der Punkte B, C und D, die den Kurven b, c bzw. d zugeordnet sind, ersichtlich ist. Der erste Geschwindigkeitsdifferenzschwellenwert wird bei der Kurve b relativ spät erreicht. Nach Erreichen des Schwellenwerts wird sofort die erste Aktivierungsstufe eingeleitet. Anschließend wird eine vorgegebene kurze Zeitspanne, vorzugsweise 15 ms, abgewartet und danach ermittelt, ob sich die Geschwindigkeitsdifferenz inzwischen verändert hat. Ist die Geschwindigkeitsdifferenz angewachsen, wird nach Ablauf der kurzen Zeitspanne sofort die zweite Aktivierungsstufe eingeleitet. Da jedoch bei der Kurve b ein zweiter Geschwindigkeitsdifferenzschwellenwert, der größer ist als der erste, bereits vor Ablauf der vorgegebenen Zeitspanne erreicht wird (Punkt B'), wird die zweite Aktivierungsstufe vorzeitig eingeleitet. Bei der Kurve c wird der zweite Geschwindigkeitsdifferenzschwellenwert nicht erreicht, so daß, da die Geschwindigkeit inzwischen nicht merklich abgesunken ist, nach Ablauf der kurzen Zeitspanne die zweite Aktivierungsstufe eingeleitet wird (Punkt C').

Im Steuersystem kann auch vorgesehen sein, daß nach Ablauf der kurzen Zeitspanne erst ermittelt wird, ob die seit Auslösung der ersten Aktivierungsstufe aufgetretene Geschwindigkeitsdifferenz einen bestimmten Wert überschritten hat. Ist dies nicht der Fall, so wird auch nach Ablauf der vorgegebenen kurzen Zeitspanne die zweite Aktivierungsstufe nicht eingeleitet. Die Kurve d zeigt einen solchen Ablauf, bei dem nur die erste Aktivierungsstufe eingeleitet wird, da die Kurve relativ flach verläuft und sich die Geschwindigkeitsdifferenz nach Erreichen des ersten Geschwindigkeitsdifferenzschwellenwertes kaum noch ansteigt.

In Fig. 4 sind die unterschiedlichen Kammerdrücke angedeutet. Die Kurve d zeigt den Druckverlauf in einer Kammer, wenn ein Fahrzeugaufprall mit geringer Intensität vorliegt. Die Kurve a hingegen verdeutlicht den Kammerinnendruckverlauf bei einer hohen Intensität, bei der z.B. sofort mehrere Stufen eines Gasgenerators gezündet werden und die Kammer eines Gassacks sehr schnell aufgeblasen wird. Dazwischen gibt es noch zahlreiche mögliche Abwandlungen, bei denen beispielsweise erst ab Erreichen von bestimmten Geschwindigkeits- oder Zeitdifferenzschwellenwerten höhere Kammerinnendrücke vorgesehen sind.

Zur Steuerung dieser Innendrücke kann ein Gasgenerator eine steuerbare Ausströmöffnung umfassen, deren Öffnungsquerschnitt abhängig von entsprechenden Signalen der Steuereinheit vergrößert oder verkleinert werden kann.

Bei dem in Fig. 2 gezeigten Mehrkammer-Gassack können die Kammern im übrigen einzeln aufgeblasen werden, wobei jeder Kammer eine Aktivierungsstufe zugeordnet ist. Wandungsteile des Mehrkammer-Gassacks weisen zudem ein Gewebe auf, das bei zunehmendem Gassack-Innendruck eine geringere Gassack-Durchlässigkeit aufweist. Ein derartiges Gewebe ist z.B. ein sogenanntes "Smart-Fabric"-Gewebe.

## Patentansprüche

1. Verfahren zur Steuerung der mehrstufigen Aktivierung eines Fahrzeuginsassen-Rückhaltesystems mit einem Gassack, wobei bei dem Verfahren eine fahrzeugsensitive Messung der beim Fahrzeugaufprall auftretenden Geschwindigkeitsdifferenzwerte erfolgt, gekennzeichnet durch folgende weiteren Schritte:
a) Bestimmung des Zeitpunktes, ab dem Geschwindigkeitsdifferenzwerte gemessen werden,
b) Bestimmung des Zeitpunkts, ab dem ein vorbestimmter erster Geschwindigkeitsdifferenzschwellenwert erreicht wird,
c) Bestimmung der Intensität des Fahrzeugaufpralls aus der Zeitdifferenz der in den Schritten a) und b) ermittelten Zeitpunkte, und
d) Liefern von unterschiedlichen Ausgangssignalen, abhängig von den durch die Schritte a) und b) ermittelten Werten, zur Einleitung unterschiedlicher Aktivierungsstufen des Rückhaltesystems je nach der bestimmten Intensität des Fahrzeugaufpralls.

2. Verfahren nach Anspruch 1, dadurch gekennzeichnet, daß zusätzlich zur Bestimmung des Zeitpunkts, ab dem durch eine fahrzeugsensitive Messung beim Fahrzeugaufprall auftretende Geschwindigkeitsdifferenzwerte ermittelt werden, eine Abtastung des Gurtsystems vorgesehen ist, zur Ermittlung, ob ein Fahrzeuginsasse angegurtet ist oder nicht, und daß das entsprechende Signal in die Bestimmung der Ausgangssignale mit einbezogen wird.

3. Verfahren nach Anspruch 1 oder 2, dadurch gekennzeichnet, daß zusätzlich zur Bestimmung des Zeitpunkts, ab dem durch eine fahrzeugsensitive Messung beim Fahrzeugaufprall auftretenden Geschwindigkeitsdifferenzwerte ermittelt werden, noch ermittelt wird, ob ein Kindersitz vorhanden ist, und daß das entsprechende Signal in die Bestimmung der Ausgangssignale mit einbezogen wird.

4. Verfahren nach einem der vorstehenden Ansprüche, dadurch gekennzeichnet, daß bei Erreichen eines vorbestimmten Zeitdifferenzschwellenwerts durch die Zeitdifferenz aus Schritt b) mehrere Aktivierungsstufen zumindestens annähernd gleichzeitig eingeleitet werden.

5. Verfahren nach einem der vorstehenden Ansprüche, dadurch gekennzeichnet, daß innerhalb einer vorgegebenen kurzen Zeitspanne ab Einleitung einer ersten Aktivierungsstufe ermittelt wird, ob sich inzwischen die Geschwindigkeitsdifferenz verändert hat und, falls diese angewachsen ist, anschließend eine zweite Aktivierungsstufe eingeleitet wird, wobei die zweite Aktivierungsstufe bei Erreichen eines vorbestimmten zweiten Geschwindigkeitsdifferenzschwellenwerts, der größer ist als der erste, bereits vor Ablauf dieser vorgegebenen Zeitspanne eingeleitet wird.

6. Verfahren nach Anspruch 5, dadurch gekennzeichnet, daß die zweite Aktivierungsstufe unabhängig von der Geschwindigkeitsänderung stets nach Ablauf der vorgegeben kurzen Zeitspanne ab Einleitung der ersten Aktivierungsstufe eingeleitet wird, wenn die Geschwindigkeit nicht merklich absinkt.

7. Verfahren nach einem der vorstehenden Ansprüche, dadurch gekennzeichnet, daß der erste Geschwindigkeitsdifferenzschwellenwert mit zunehmender Zeit ab der Messung von Geschwindigkeitsdifferenzwerten in vorbestimmtem Maße angehoben wird.

8. Steuersystem zur Durchführung des Verfahrens nach einem der vorstehenden Ansprüche, mit einem Meßsensor zur Ermittlung der Intensität des Fahrzeugaufpralls, dadurch gekennzeichnet, daß der Meßsensor als stetig die Geschwindigkeitsänderung erfassender Sensor ausgebildet ist und daß eine Steuereinheit zum Vergleich der Geschwindigkeitsänderung mit vorgegebenen Geschwindigkeitsänderungsschwellenwerten, zum Bestimmen der Zeitdifferenz, zum Vergleich der Zeitdifferenz mit vorbestimmten Zeitdifferenzschwellenwerten und zum Liefern der unterschiedlichen Ausgangssignale vorgesehen ist.

9. Steuersystem nach Anspruch 8 zur Durchführung des Verfahrens nach Anspruch 2, dadurch gekennzeichnet, daß ein Gurtsensor vorgesehen ist, der bestimmt, ob ein Fahrzeuginsasse angegurtet ist oder nicht.

10. Steuersystem nach Anspruch 9, dadurch gekennzeichnet, daß der Gurtsensor ein Gurtschloßsensor ist.

11. Steuersystem nach einem der Ansprüche 8 bis 10 zur Durchführung des Verfahrens nach Anspruch 3, dadurch gekennzeichnet, daß ein Kindersitzdetektor vorhanden ist.

12. Fahrzeuginsassen-Rückhaltesystem mit einem Steuersystem nach einem der Ansprüche 8 bis 11, dadurch gekennzeichnet, daß das Rückhaltesystem zumindest einen Gasgenerator umfaßt, der so ausgebildet ist, daß er abhängig von den Ausgangssignalen der Steuereinheit unterschiedliche Gassackinnendrücke erzeugen kann.

13. Fahrzeuginsassen-Rückhaltesystem nach Anspruch 12, dadurch gekennzeichnet, daß der Gasgenerator ein Mehrstufengasgenerator ist.

14. Fahrzeuginsassen-Rückhaltesystem nach Anspruch 12 oder 13, dadurch gekennzeichnet, daß der Gasgenerator eine durch die Steuereinheit steuerbare Ausströmöffnung umfaßt.

15. Fahrzeuginsassen-Rückhaltesystem nach einem der Ansprüche 12 bis 14, dadurch gekennzeichnet, daß ein Mehrkammergassack vorgesehen ist, dessen Kammern einzeln aufgeblasen werden und je einer Aktivierungsstufe zugeordnet sind.

16. Fahrzeuginsassen-Rückhaltesystem nach einem der Ansprüche 12 bis 15, dadurch gekennzeichnet, daß der Mehrkammergassack Wandungsteile aus einem Gewebe aufweist, das bei zunehmendem Gasinnendruck eine geringere Gasdurchlässigkeit besitzt.

## Claims

1. A method of controlling multistage activation of a vehicle occupant restraint system comprising a gas bag, the method including a vehicle sensitive measurement of the values of the differences in velocity occurring during vehicle collision, characterized by the following further steps:
a) determining the point in time as of which the values of the differences in velocity are measured,
b) determining the point in time as of which a predetermined first threshold value of the differences in velocity is attained,
c) determining the intensity of the vehicle collision from the time difference of the points in time established in steps a) and b), and
d) furnishing various output signals depending on the values established by the steps a) and b) for initiating various stages in activating the restraint system, in accordance with the determined intensity of the vehicle collision.

2. The method as set forth in claim 1, characterized in that in addition to determining the point in time as of which the values of the differences in velocity occurring during vehicle collision are established by a vehicle sensitive measurement, sensing of the belt system is provided to detect whether or not a vehicle occupant has buckled up, and that the corresponding signal is incorporated in determining the output signals.

3. The method as set forth in claim 1 or 2, characterized in that in addition to determining the point in time as of which the values of the differences in velocity occurring during vehicle collision are established by a vehicle sensitive measurement, it is further established whether a child seat is provided, and that the corresponding signal is incorporated in determining the output signals.

4. The method as set forth in any of the preceding claims, characterized in that when a predetermined time difference threshold value is attained by the difference in time from step b), several activation stages are initiated at least roughly simultaneously.

5. The method as set forth in any of the preceding claims, characterized in that within a given short period of time from having initiated a first activation stage it is established whether there has been a change in the velocity difference in the meantime, and, if this has increased, a second activation stage is subsequently initiated, said second activation stage being initiated already prior to termination of the given period of time when a predetermined second threshold value of the differences in velocity is attained which is greater than the first.

6. The method as set forth in claim 5, characterized in that irrespective of the change in velocity, said second activation stage is initiated always on termination of the given short period of time as of initiation of said first activation stage, if the velocity does not drop appreciably.

7. The method as set forth in any of the preceding claims, characterized in that the first threshold value of the differences in velocity is elevated by a predetermined amount with increasing time as of measurement of velocity difference values.

8. A control system for implementing the method as set forth in any of the preceding claims, including a measurement sensor for sensing the intensity of the vehicle collision, characterized in that the measurement sensor is configured as a sensor continually sensing the change in velocity, and that a control unit for comparing the change in velocity to given threshold values of the differences in velocity, for determining the time difference, for comparing the time difference to predetermined time difference threshold values and for furnishing the differing output signals is provided.

9. The control system as set forth in claim 8 for implementing the method as set forth in claim 2, characterized in that a belt sensor is provided which determines whether or not a vehicle occupant has buckled up.

10. The control system as set forth in claim 9, characterized in that the belt sensor is a belt buckle sensor.

11. The control system as set forth in any of the claims 8 to 10 for implementing the method as set forth in claim 3, characterized in that a child seat detector is provided.

12. A vehicle occupant restraint system including a control system as set forth in any of the claims 8 to 11, characterized in that the restraint system comprises at least one gas generator which is configured so that it is able to produce differing gas bag internal pressures as a function of the output signals of the control unit.

13. The vehicle occupant restraint system as set forth in claim 12, characterized in that the gas generator is a multistage gas generator.

14. The vehicle occupant restraint system as set forth in claim 12 or 13, characterized in that the gas generator comprises an outflow opening controllable by the control unit.

15. The vehicle occupant restraint system as set forth in any of the claims 12 to 14, characterized in that a multiple chamber gas bag is provided, the chambers of which are inflated individually and are each assigned to an activation stage.

16. The vehicle occupant restraint system as set forth in any of the claims 12 to 15, characterized in that the multiple chamber gas bag comprises wall components of a fabric having a reduced gas permeability with increasing gas bag internal pressure.

## Revendications

1. Procédé pour commander l'activation en plusieurs phases d'un système de retenue des occupants d'un véhicule comportant un coussin à gaz, une mesure sensible aux mouvements du véhicule, des valeurs de différence de vitesse engendrées par un choc du véhicule, étant effectuée lors du procédé, caractérisé par les autres étapes suivantes :
a) détermination du moment à partir duquel des valeurs de différence de vitesse sont mesurées,
b) détermination du moment à partir duquel une première valeur de seuil de différence de vitesse prédéterminée est atteinte,
c) détermination de l'intensité du choc du véhicule à partir de la différence dans le temps entre les moments enregistrés lors des étapes a) et b), et
d) fourniture de signaux de sortie différents en fonction des valeurs enregistrées lors des étapes a) et b) pour déclencher des phases d'activation différentes du système de retenue selon l'intensité déterminée du choc du véhicule.

2. Procédé selon la revendication 1, caractérisé en ce qu'en plus de la détermination du moment à partir duquel des valeurs de différence de vitesse engendrées par un choc du véhicule sont enregistrées par une mesure sensible aux mouvements du véhicule, il est prévu une surveillance du système de ceintures pour déterminer si un occupant du véhicule est attaché ou non, et en ce que le signal correspondant est pris en compte pour déterminer les signaux de sortie.

3. Procédé selon les revendications 1 ou 2, caractérisé en ce qu'en plus de la détermination du moment à partir duquel des valeurs de différence de vitesse engendrées par un choc du véhicule sont enregistrées par une mesure sensible aux mouvements du véhicule, on détermine encore s'il existe un siège pour enfant, et en ce que le signal correspondant est pris en compte pour déterminer les signaux de sortie.

4. Procédé selon l'une des revendications précédentes, caractérisé en ce que lorsqu'une valeur de seuil prédéterminée de différence dans le temps est atteinte par la différence de temps résultant de l'étape b), plusieurs phases d'activation sont déclenchées au moins sensiblement simultanément.

5. Procédé selon l'une des revendications précédentes, caractérisé en ce que dans les limites d'un laps de temps court prédéfini, à partir du déclenchement d'une première phase d'activation, on détermine si la différence de vitesse a entre-temps varié et, au cas où elle s'est accrue, une deuxième phase d'activation est alors déclenchée, la deuxième phase d'activation étant déclenchée avant l'écoulement de ce laps de temps prédéfini, lorsqu'une seconde valeur de seuil de différence de vitesse prédéterminée supérieure à la première est atteinte.

6. Procédé selon la revendication 5, caractérisé en ce que la deuxième phase d'activation est toujours déclenchée, indépendamment de la variation de la vitesse, après l'écoulement du court laps de temps prédéfini, à partir de la première phase d'activation, si la vitesse ne diminue pas de manière notable.

7. Procédé selon l'une des revendications précédentes, caractérisé en ce que la première valeur de seuil de différence de vitesse est augmentée dans une proportion prédéterminée à mesure que le temps augmente à partir de la mesure des valeurs de différence de vitesse.

8. Système de commande pour réaliser le procédé selon l'une des revendications précédentes, comprenant un capteur de mesure pour déterminer l'intensité du choc du véhicule, caractérisé en ce que le capteur de mesure est conçu sous la forme d'un capteur enregistrant en permanence la variation de la vitesse, et en ce qu'il est prévu une unité de commande pour comparer la variation de la vitesse avec des valeurs de seuil prédéfinies de variation de la vitesse afin de déterminer la différence dans le temps, de comparer la différence dans le temps avec des valeurs de seuil prédéterminées de différence dans le temps et de fournir les différents signaux de sortie.

9. Système de commande selon la revendication 8 pour réaliser le procédé selon la revendication 2, caractérisé en ce qu'il est prévu un capteur de ceinture qui détermine si un occupant du véhicule est attaché ou non.

10. Système de commande selon la revendication 9, caractérisé en ce que le capteur de ceinture est un capteur de serrure de ceinture.

11. Système de commande selon l'une des revendications 8 à 10 pour réaliser le procédé selon la revendication 3, caractérisé en ce qu'il est prévu un détecteur de siège pour enfant.

12. Système de retenue des occupants d'un véhicule comprenant un système de commande selon l'une des revendications 8 à 11, caractérisé en ce que le système de retenue comprend au moins un générateur de gaz conçu pour pouvoir produire des pressions intérieures de coussin à gaz différentes selon les signaux de sortie de l'unité de commande.

13. Système de retenue des occupants d'un véhicule selon la revendication 12, caractérisé en ce que le générateur de gaz est un générateur de gaz à plusieurs étages.

14. Système de retenue des occupants d'un véhicule selon la revendication 12 ou 13, caractérisé en ce que le générateur de gaz comprend un orifice de sortie pouvant être commandé par l'unité de commande.

15. Système de retenue des occupants d'un véhicule selon l'une des revendications 12 à 14, caractérisé en ce qu'il est prévu un coussin à gaz à plusieurs chambres qui sont gonflées individuellement et à chacune desquelles est associée une phase d'activation.

16. Système de retenue des occupants d'un véhicule selon l'une des revendications 12 à 15, caractérisé en ce que le coussin à gaz à plusieurs chambres comporte des parties de paroi réalisées dans un tissu dont la perméabilité aux gaz diminue à mesure que la pression intérieure du coussin à gaz augmente.
